# EUROPÄISCHE PATENTSCHRIFT

(11) **EP 1 080 966 B1**
(45) Veröffentlichungstag und Bekanntmachung des Hinweises auf die Patenterteilung: **01.02.2006**
(21) Anmeldenummer: 00118961.2
(22) Anmeldetag: 01.09.2000
(51) Int. Cl.: B60J 7/12, B60J 7/06

(54) **Verdeck für ein Cabriolet**
Foldable top for convertible
Capote pour cabriolet

(30) Priorität: 06.09.1999 DE 19942428
(43) Veröffentlichungstag der Anmeldung: 07.03.2001
(73) Patentinhaber: Webasto Vehicle Systems International GmbH, 82131 Stockdorf (DE)
(72) Erfinder: Schütt, Thomas, 82256 Fürstenfeldbruck (DE)
(74) Vertreter: Wiese, Gerhard

(56) Entgegenhaltungen:
- DE-A- 19 714 106
- DE-A- 19 801 876
- US-A- 5 052 747
- US-A- 5 533 777

## Beschreibung

Die Erfindung betrifft ein Verdeck für ein Cabriolet mit einer an einem Frontspriegel befestigten Verdeckplane, die mit einer seitliche Dachlenker umfassenden Verdeckmechanik zum Öffnen des Verdecks in eine hintere Ablagestellung bewegbar ist.

Zum Ablegen eines derartigen konventionellen Verdecksystems wird üblicherweise der erste Verdeckteil über Gelenke in den seitlichen Dachlenkern nach hinten geklappt und auf einen zweiten Verdeckteil gelegt, wobei jedoch die Wölbungen der beiden Verdeckteile entgegengesetzt gerichtet sind und somit eine große Ablagehöhe entsteht. Außerdem ist bei dieser Art der Verdeckklappung die Innenseite des ersten Verdeckteils nach oben gerichtet und könnte verschmutzt werden, so daß sie sich nicht als Abdeckung des Ablageraumes eignet.

Aus der WO 97/37866 ist ein kinematisches Verdeck für ein Cabriolet bekannt geworden, bei dem ein vorderes Verdeckteil eines dreigliedrigen Verdeckrahmens über eine Parallelogrammlenkeranordnung, die die seitlichen Dachlenker des vorderen Verdeckteils mit denen des mittleren Verdeckteils verbindet, aus der Schließstellung durch Parallelverschwenkung in die Ablagestellung gebracht wird, in der das vordere Verdeckteil gleichbombiert, d. h. mit gleichgerichteter Wölbung auf dem mittleren Verdeckteil liegt. Die Parallelverschwenkbewegung des ersten Verdeckteils ist über einen Steuerhebel mit der Ablegebewegung des hinteren Verdeckteils zwangsgekoppelt.

Aufgabe der Erfindung ist es, ein eingangs genanntes Verdeck zu schaffen, das raumsparend in dem Ablageraum untergebracht und insbesondere auch während der Fahrt in eine Teilöffnungsstellung gebracht werden kann.

Diese Aufgabe wird bei dem oben genannten Verdeck erfindungsgemäß dadurch gelöst, daß der Frontspriegel beidseits an Führungen der seitlichen Dachlenker längsverschiebbar geführt ist, so daß durch eine Rückwärtsverschiebung des Frontspriegels entlang der seitlichen Führungen aus seiner Schließstellung, in der er sich an einem vorderen Querholm anlegt, in eine Zwischenstellung eine Teilöffnung des Verdecks einstellbar ist. Durch das Verschieben des Frontspriegels, das auch während der Fahrt vorgenommen werden kann, kann eine Teilöffnung des Verdecks für eine Belüftung des Innenraums eingestellt werden. Die seitlichen Dachlenker oder Seitenholme des Verdeckrahmens können dabei in ihrer Position an dem vorderen Querholm verriegelt bleiben und halten somit die Stabilität des Verdeckrahmens aufrecht. Während durch das Zurückfahren des Frontspriegels die Verdeckplane in dem vorderen Verdeckbereich z. B. in eine Z-förmige Faltung gelegt wird, bleibt die Verdeckplane in dem hinteren Bereich des Verdecks, z. B. von einem am Verdeckrahmen nicht verschiebbaren Hauptspriegel, an dem die Verdeckplane festgelegt ist, bis zu einer hinteren Befestigung der Verdeckplane an einer Gürtellinie der Karosserie, weiterhin in ihrer Form gespannt. Durch das Verschieben des Frontspriegels, der üblicherweise eine Wölbung oder Bombierung aufweist, über den dahinterliegenden, ebenfalls bombierten Verdeckabschnitt ergibt sich eine gleichbombierte Anordnung, die beim Ablegen des Verdecks in den Ablageraum einen reduzierten Raumbedarf ergibt. Verschiedene Zwischenstellungen des Frontspriegels bis zu einer definierten maximal geöffneten Zwischenstellung sind einstellbar. Selbstverständlich gelten die Erläuterungen auch für den entgegengesetzten Bewegungsablauf, wenn das Verdeck aus dem Ablageraum herausbewegt und wieder geschlossen wird, und auch aus dieser Bewegungsrichtung sind Zwischenstellungen einstellbar. In der Schließstellung liegt der Frontspriegel an dem Querholm am Oberrand der Frontscheibe des Fahrzeugs oder einem vergleichbaren fahrzeugfesten Bauteil wie einem Frontscheibenrahmen, einem Windlauf oder einem Verbindungsteil zwischen den oberen Knoten der beiden A-Säulen.

Vorteilhafte Ausgestaltungen der Erfindung sind in den Unteransprüchen angegeben.

Für eine platzsparende Unterbringung des Verdecks in einem Ablageraum ist es vorteilhaft, wenn die seitlichen Dachlenker oder Seitenholme jeweils in einen vorderen und einen hinteren Dachlenker unterteilt sind, die in der Schließposition des Verdecks einen im wesentlichen starren, an den Querholm angekoppelten Verdeckrahmen bilden und in der Ablagestellung des geöffneten Verdecks aus der starren Längskopplung gelöst und in Kompaktanordnung untergebracht sind. Beim Lösen der Kopplung können die Dachlenker in unterschiedlicher Weise um-, aus- oder eingeschwenkt werden und in unterschiedlichen Stellungen, die einen geringeren Platzbedarf insbesondere in Fahrzeuglängsrichtung aufweisen, angeordnet werden. Der hintere Dachlenker kann ein festes Seitenteil einer Dachkassette sein, die den Hauptspriegel mit den beidseitig befestigten Seitenteilen enthält.

In einer zweckmäßigen Ausgestaltung enthält der Frontspriegel die vorderen Dachlenker z. B. als integrierte Bauteile und er ist sowohl in seiner Schließstellung wie auch in einer Zwischenstellung nur an den Führungen der hinteren Dachlenker gelagert und gemeinsam mit den vorderen Dachlenkern in eine Zwischenstellung verschiebbar. Bei der Öffnung des Verdecks in eine Zwischenstellung werden somit auch die vorderen seitlichen Dachlenker aus ihrer Verriegelung am Querholm gelöst und von diesem entfernt. Die den Verdeckrahmen haltenden Teile sind in diesem Fall mit einer größeren Stabilität ausgelegt. Da der Frontspriegel nicht hochgeklappt oder hochgeschwenkt wird, sondern nur knapp über die dahinterliegende Verdeckplane geschoben wird, ergibt sich eine geringere Windangriffsmöglichkeit mit entsprechenden Vorteilen für die Stabilität des Verdecks bei seiner Teilöffnung auch während der Fahrt.

Zweckmäßigerweise kann der Frontspriegel in seiner Schließstellung an den Führungen der vorderen Dachlenker und/oder an den Führungen der hinteren Dachlenker verschiebbar gelagert sein, wodurch unterschiedliche Gestaltungen für die Lagerung des Frontspriegels realisierbar sind.

In einer bevorzugten Ausführungsform bleiben beim Verschieben des Frontspriegels aus seiner Schließstellung in eine Zwischenstellung die vorderen Dachlenker mit dem Querholm gekoppelt, wodurch eine hohe Festigkeit und Stabilität des Verdeckrahmens gewährleistet ist.

Vorzugsweise ist der Frontspriegel in einer definierten Zwischen- oder Endstellung an den Führungen der hinteren Dachlenker oder der Dachkassette gelagert, so daß die vorderen Dachlenker in eine bezüglich der Länge des zu faltenden Verdecks längenverkürzte Anordnung gebracht werden können. Dabei ist es zweckmäßig, wenn der vordere und der hintere Dachlenker durch ein Schwenkgelenk schwenkbar miteinander verbunden sind und wenn zum Ablegen des Verdecks in die Ablagestellung die vorderen Dachlenker verschwenkt werden, insbesondere eingeschwenkt oder auch geringfügig ausgeschwenkt werden. Die Schwenkbewegung der vorderen Dachlenker kann in einer in etwa horizontalen Fahrzeugebene, in etwa um eine Fahrzeugquerachse oder um davon abweichend verlaufende Schwenkachsen erfolgen.

Das Verdeck kann zwischen dem Frontspriegel und dem Hauptspriegel zumindest einen an den Führungen geführten Mittelspriegel aufweisen, an dem die Verdeckplane befestigt ist. Beim Zurückfahren in eine Zwischenstellung fährt der Frontspriegel zunächst unter Bildung einer Z-Faltung der Verdeckplane gegen den an der Führung festgelegten Mittelspriegel, bis er an oder im wesentlichen über dem Mittelspriegel angeordnet ist. Die Verdeckplane bleibt dabei vom Mittelspriegel über den Hauptspriegel bis zur hinteren Befestigung der Verdeckplane an der Gürtellinie der Fahrzeugkarosserie in ihrer Form gespannt. Der Front- und der Mittelspriegel können anschließend als miteinander gekoppelte Einheit weiter zu dem Hauptspriegel verschoben werden. Der Antrieb dieser Spriegeleinheit erfolgt über den Frontspriegel, während der Mittelspriegel, der keinen eigenen Antrieb aufweist, mitgeführt wird.

In einer zum Ablegen des Verdecks zweckmäßigen Anordnung sind die hinteren Dachlenker, oder die Seitenteile der Dachkassette, über eine jeweilige parallelogrammartige Viergelenkanordnung, die eine Hauptsäule und einen Hauptlenker enthält, an der Karosserie schwenkbar gelagert. Ein elektrischer oder hydraulischer Hauptantrieb wirkt beispielsweise auf die Hauptsäule und bewegt über diese die gesamte Viergelenkanordnung und somit das Verdeck.

Ein eigener Antrieb für die vorderen Dachlenker ist nicht erforderlich, wenn die Viergelenkanordnung über eine Verbindungslenkereinrichtung mit dem vorderen Dachlenker koppelt ist und während ihrer Schwenkbewegung zum Ablegen des Verdecks in die Ablagestellung das Einschwenken des vorderen Dachlenkers über diese Verbindungslenkereinrichtung ausführt.

In einer einfachen Gestaltung ist ein Verbindungslenker der Verbindungslenkereinrichtung einerseits an einem Überstand des Hauptlenkers, der über seine Gelenkverbindung mit dem hinteren Dachlenker hinaussteht, schwenkbar angelenkt und andererseits mit dem vorderen Dachlenker oder mit einer zwischengeschalteten Hilfslenkeranordnung des Dachlenkers gekoppelt.

Eine weitere Ausgestaltung sieht vor, daß die Verbindungslenkereinrichtung von der schwenkenden Hauptsäule der Viergelenkanordnung angetrieben ist, wobei jedoch auch der Hauptlenker als Antrieb verwendet werden kann. Dadurch, daß die Verbindungslenkereinrichtung über eine Riegeleinrichtung mit der Hauptsäule über einen definierten Schwenkweg der Hauptsäule in Antriebseingriff gekoppelt ist, können die Anfangsschwenkstellung und die Endschwenkstellung der Hauptsäule festgelegt werden, die den Bereich bestimmen, in dem die Verbindungslenkereinrichtung als Schwenkantrieb beim Ein- bzw. Ausklappen der Verdecks in aktiver Antriebsverbindung ist. Statt die Hauptsäule kann die Riegeleinrichtung gemäß einer alternativen Ausgestaltung auch die Verbindungslenkereinrichtung mit dem Hauptlenker koppeln.

Besonders bevorzugt ist eine Anordnung, bei der der linke und der rechte vordere Dachlenker von der Verbindungslenkereinrichtung zeitversetzt verschwenkt werden. Dadurch können die beiden verschwenkbaren Dachlenker von der linken und der rechten Verdeckseite her ohne gegenseitige Behinderung nacheinander in eine Querstellung z. B. an oder unterhalb des Hauptspriegels oder der Dachkassette eingeschwenkt werden. Die verschwenkbaren Dachlenker können somit eine größere Länge aufweisen, die beispielsweise annähernd der Breite des Verdecks entspricht.

Zweckmäßigerweise stellt die Verbindungslenkereinrichtung eine variierende Antriebsgeschwindigkeit für den vorderen Dachlenker bereit. So kann beispielsweise eine Bewegungsübersetzung der Verbindungslenkereinrichtung derart ausgelegt sein, daß die Verschwenkgeschwindigkeit des Dachlenkers in Abhängigkeit von der Schwenkgeschwindigkeit der Hauptsäule eingestellt und über den Schwenkweg variabel ist. Damit kann zu Beginn und am Ende der Verschwenkung eine vergleichsweise langsame Geschwindigkeit zum Ablegen der Dachlenker an der Dachkassette bzw. zum Ankoppeln an den vorderen Querholm und dazwischen eine höhere Verschwenkgeschwindigkeit eingestellt werden.

Vorzugsweise enthält die Verbindungslenkereinrichtung einen konzentrisch zur Schwenklagerachse der Hauptsäule und angrenzend an die Hauptsäule schwenkbar gelagerten Ring, der über seinen Hebelarm und über Zwischenlenker und Gelenke der Verbindungslenkereinrichtung mit dem Dachlenker in Antriebsverbindung ist.

Des weiteren kann die Riegeleinrichtung einen Riegelstift aufweisen, der in dem Ring axial verschiebbar gelagert ist und in Abhängigkeit von der Schwenkstellung der Hauptsäule zum Dachkassetten-Seitenteil in einen Koppeleingriff mit der Hauptsäule verschoben ist.

Anschläge wie Stifte, Vorsprünge und dergleichen können vorgesehen sein, um einen Bewegungsweg der Verbindungslenkereinrichtung, insbesondere des Hebelarms des Ringes, zu begrenzen.

Zum gleichmäßigen und platzsparenden Anordnen der in Querrichtung eingeschwenkten Dachlenker ist es vorteilhaft, wenn die an den beidseitigen Dachkassetten-Seitenteilen angeordneten und eine senkrechte Schwenkachse aufweisenden Schwenkgelenke der Dachlenker in Fahrzeuglängsrichtung gegeneinander versetzt sind, wobei das Maß des Versatzes beispielsweise etwa der Dicke der Dachlenker entspricht. Damit können auch längere Dachlenker in die Ablagestellung platzsparend eingeschwenkt werden.

In einer alternativen Gestaltung betätigt der Frontspriegel bei einer weiteren Rückwärtsverschiebung aus einer definierten Zwischenstellung heraus eine Hilfslenkeranordnung, über die die vorderen Dachlenker verschwenkt oder eingeschwenkt werden. Durch diese Zwangskopplung ist ebenfalls kein separater Antrieb erforderlich. Jedoch kann auch ein Zusatzantrieb vorgesehen sein, der die vorderen Dachlenker verschwenkt, wobei das Verschwenken unabhängig von der Stellung oder Bewegung des Frontspriegels oder anderer Verdeckkomponenten erfolgen kann.

Ein Antrieb für den Frontspriegel ist vorzugsweise an einem hinteren Dachlenker oder einem Hauptspriegel angeordnet und über eine Kopplung wie z. B. Kabel- oder Bowdenzüge mit dem Frontspriegel verbunden. Diese Anordnungen des Antriebs lassen eine Gestaltung des Dachhimmels mit möglichst geringer Beeinträchtigung des Kopfraumes für die Fahrzeuginsassen zu.

In einer zweckmäßigen Gestaltung ist vorgesehen, daß eine jeweilige Verschiebebewegung des Frontspriegels aus einer geöffneten, definierten Zwischenstellung eine Verriegelungseinrichtung zum Festlegen der Dachlenker an dem Querholm ver- bzw. entriegelt. Damit erfolgt das Ver- und Entriegeln des Verdeckrahmens an dem Querholm, solange die Verdeckplane im vorderen Verdeckbereich ungespannt ist. Während bei herkömmlichen Verdecksystemen die letzte Schließbewegung des Verdecks gleichzeitig das Spannen der gesamten Verdeckplane und das Betätigen der Verriegelungseinrichtung umfaßt, wofür hydraulische Kraftantriebe erforderlich sind, können bei der vorliegenden Gestaltung schwächer dimensionierte elektrische Antriebe das nacheinander ablaufende Verriegeln und das Spannen des vorderen Abschnitts der Verdeckplane ausführen.

Der Frontspriegel kann mittels Gleitelementen an den Führungen gelagert sein oder auch durch Kombinationen aus Gleit- und Rollenelementen.

Wenn die Führungen Steigungsabschnitte aufweisen, kann der Frontspriegel bei entsprechender Anordnung dieser Steigungsabschnitte schon beim Öffnen aus seiner Schließstellung angehoben werden und kann über die dahinterliegende Verdeckplane geführt werden.

Die vorderen Dachlenker können jeweils aus zwei hintereinander angeordneten und durch ein Gelenk miteinander verbundenen Dachlenkerelementen aufgebaut sein. Dadurch lassen sich längere Verdecke durch mehrfache Unterteilungen der seitlichen Dachlenker ebenfalls in einer kompakten Anordnung ablegen.

Bei dem beschriebenen Verdeckmechanismus kann der Frontspriegel als Abdeckung für einen Ablageraum des Verdecks gebildet sein, da seine Oberfläche stets nach oben weist.

Nachfolgend werden Ausführungsbeispiele der Erfindung unter Bezugnahme auf Zeichnungen näher erläutert. Es zeigt:
- Fig. 1 bis 6: in einer seitlichen Draufsicht in schematischer Darstellung ein erstes Ausführungsbeispiel eines Verdecks für ein Cabriolet in unterschiedlichen Stellungen von einem geschlossenen Verdeck (Fig. 1) bis zu einem offenen, abgelegten Verdeck (Fig. 6);
- Fig. 7 bis 9: in einer seitlichen Draufsicht in schematischer Darstellung ein zweites Ausführungsbeispiel eines Verdecks in verschiedenen Stellungen von einer Teilöffnung bis zur vollständigen Öffnung;
- Fig. 10 bis 13: in einer seitlichen Draufsicht in schematischer Darstellung ein drittes Ausführungsbeispiel eines Verdecks in verschiedenen Stellungen von einer Schließstellung bis zur vollständigen Öffnung;
- Fig. 14 bis 18: in perspektivischen Ansichten eine Gelenkanordnung für einen einschwenkbaren seitlichen Dachlenker in unterschiedlichen Schwenkstellungen; und
- Fig. 19 und 20: in einer oberen Draufsicht zwei seitliche, ausschwenkbare Dachlenker in Normal- und Ausschwenkstellung.

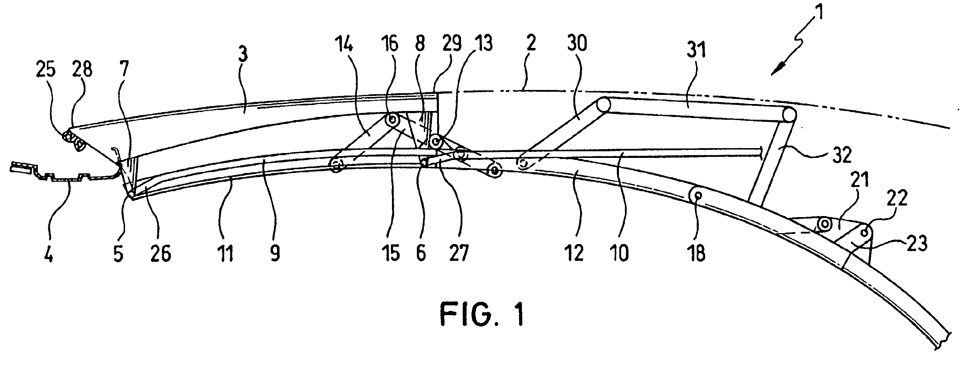

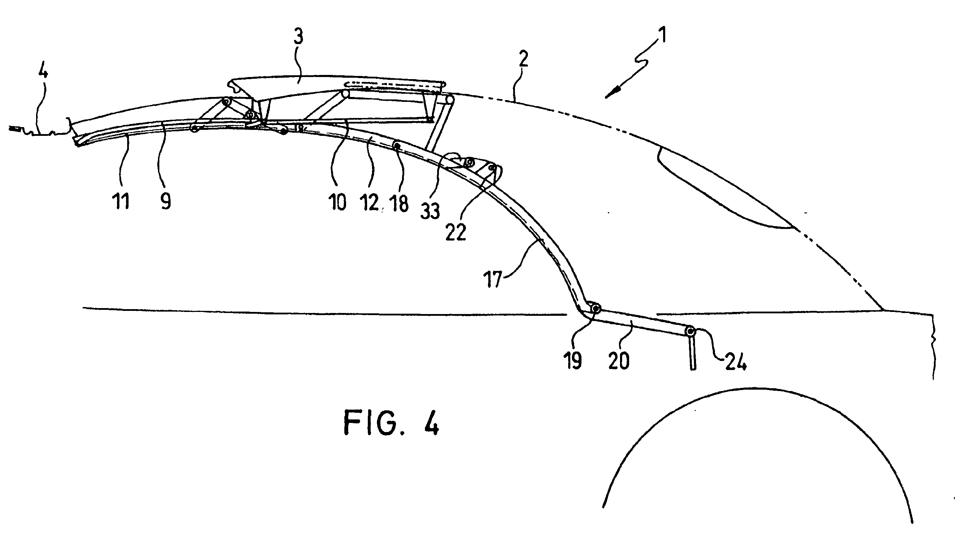

Ein Verdeck 1 eines Cabriolets enthält eine textile Verdeckplane 2, die an einem das Mittenteil der Verdeckspitze bildenden Frontspriegel 3 befestigt ist, sich bei geschlossenem Verdeck 1 von einem vorderen Querholm 4, von einem oberen Frontscheibenrahmen oder einem daran angebrachten Windlauf an der Oberkante der Frontscheibe über den Insassenraum bis an die Karosserie im Heckbereich des Fahrzeugs oder Cabriolets erstreckt (siehe insbesondere Fig. 1 und 4) und dort in üblicher Weise z. B. an der Gürtellinie befestigt ist. Der Frontspriegel 3 erstreckt sich in bekannter Weise quer über die Breite des Verdecks 1 und ist beidseits jeweils über ein vorderes und ein hinteres Gleitelement 5 bzw. 6, die an vorderen und hinteren Stützen 7 bzw. 8 des Frontspriegels 3 angeordnet oder ausgebildet sind, in einer Führungseinrichtung längsverschiebbar gelagert, die eine vordere und eine hintere Führungsschiene 9 bzw. 10 aufweist. Da das Verdeck 1 im wesentlichen symmetrisch zur Längsachse des Fahrzeugs gebildet ist, erfolgt die Beschreibung im wesentlichen anhand der in Fahrtrichtung linksseitigen Bauteile des Verdecks und der Verdeckmechanik, sie gilt jedoch gleichzeitig auch für die rechtsseitigen Bauteile. Die beiden Führungsschienen 9, 10 sind an einem vorderen bzw. einem hinteren Seitenholm oder Dachlenker 11 bzw. 12 der Verdeckmechanik angebracht oder mit diesen integriert ausgebildet.

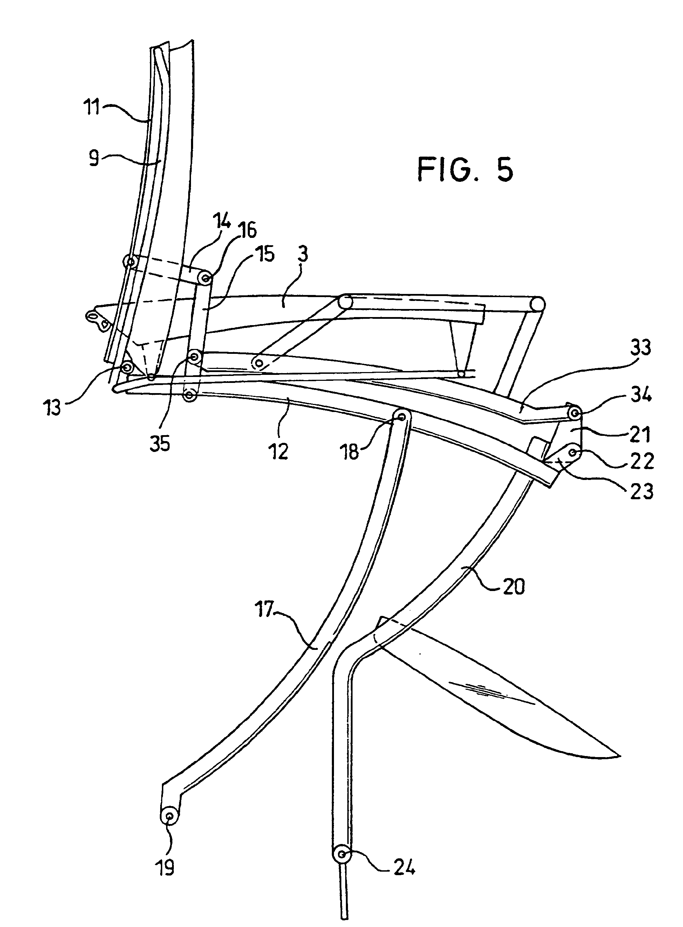

Der vordere Dachlenker 11 ist über ein Gelenk 13 schwenkbar an dem hinteren Dachlenker 12 angelenkt (siehe Fig. 1 und 5) und ist mit diesem zusätzlich über eine Hilfslenkeranordnung mit einem ersten Schwenkhebel 14, der am vorderen Dachlenker 11 schwenkbar gelagert ist, sowie einem zweiten Schwenkhebel 15, der am hinteren Dachlenker 12 schwenkbar gelagert und mit dem ersten Schwenkhebel 14 in einem Gelenk 16 gelenkig verbunden ist, gekoppelt.

Der hintere Dachlenker 12 ist über eine parallelogrammartige Viergelenkanordnung bewegbar gelagert (siehe Fig. 5), die eine Hauptsäule 20, die einerseits in einem Gelenk 18 am hinteren Dachlenker 12 und andererseits in einem Gelenk 19 an der nicht näher dargestellten Karosserie angelenkt ist, und einen Hauptlenker 20 aufweist, an dessen Oberende eine seitlich versetzte Lagerplatte 21 angebracht ist, die in einem Schwenkgelenk 22 an einem seitlichen Ansatz 23 des hinteren Dachlenkers 12 schwenkbar verbunden ist, und der an seinem Unterende in einem Gelenk 24 an der Karosserie angelenkt ist.

In einer Schließstellung gemäß Fig. 1 und in einer der Teilöffnungsstellung oder Zwischenstellung des Verdecks 1 gemäß Fig. 4 werden der vordere und der hintere Dachlenker 11 bzw. 12 von der Hauptsäule 20 und dem Hauptlenker 20 der Viergelenkanordnung an der als K-Linie bezeichneten Kontur der Seitenfensteroberkante des Fahrzeugs gehalten. Die Hauptsäule 20 und der Hauptlenker 20 liegen dabei bei seitlicher Betrachtung gemäß Fig. 1 bis 4 an der Hinterkante des Seitenfensters übereinander und bilden somit die Fortsetzung der vorderen und hinteren Dachlenker 11, 12 bis hinunter zur Gürtellinie des Cabriolets. An den Dachlenkern 11, 12 und dem Hauptlenker 20 sind Dichtungen für die Seitenscheiben angebracht.

In der Schließstellung gemäß Fig. 1 ist der vordere Dachlenker 11 an dem Querholm 4, an einem dort vorgesehenen Windlauf oder der A-Säule gelagert und mit einer nicht dargestellten Riegeleinrichtung verriegelt. Der Frontspriegel 3 liegt an dem Querholm 4 an, wobei eine Dichtung 25 am Vorderende des Frontspriegels 3 diesen gegen den Querholm 4 hin abdichtet. Die vordere Führungsschiene 9 enthält einen vorderen Steigungsabschnitt 26 für das vordere Gleitelement 5 und die hintere Führungsschiene 10 enthält einen vorderen Steigungsabschnitt 27 für das hintere Gleitelement 6.

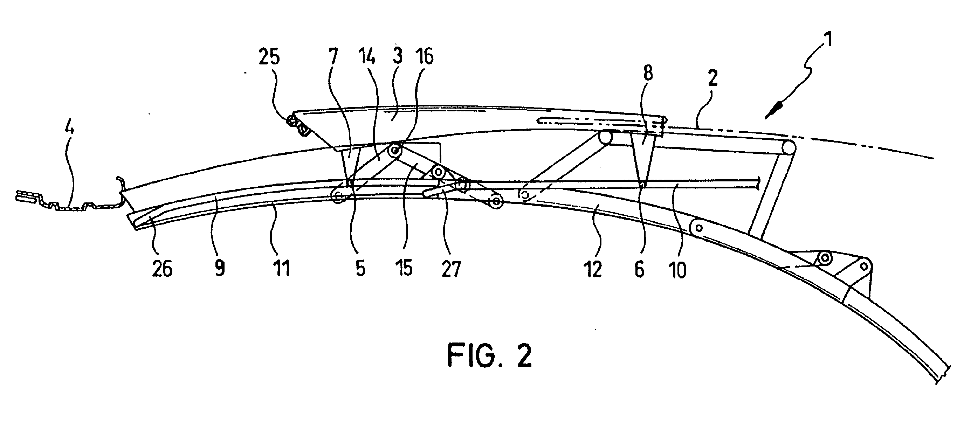

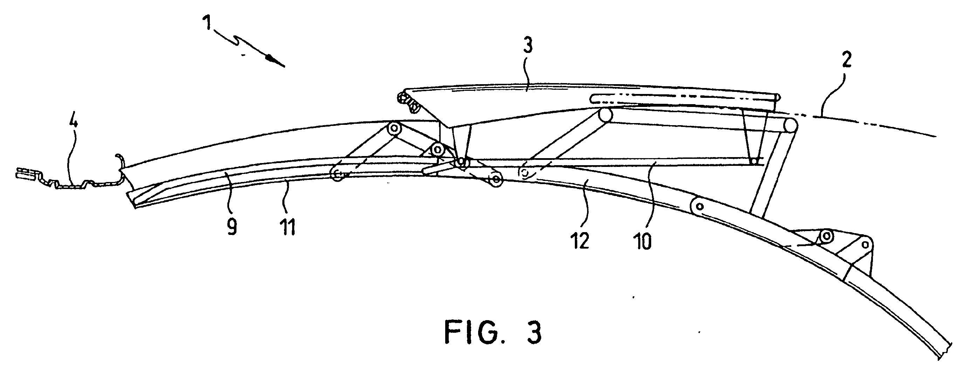

Beim Öffnen des Verdecks 1 in eine Zwischenstellung wird der Frontspriegel 3 durch einen nicht dargestellten Antrieb, der z. B. am hinteren Dachlenker 12 integriert ist und über beidseitige Steigungskabel oder Bowdenzüge mit dem Frontspriegel 3 zur Bewegungsübertragung verbunden ist, translatorisch nach hinten verschoben (Bewegung von Fig. 1 nach Fig. 2), wobei er durch die anfangs in den Steigungsabschnitten 26, 27 der Führungsschienen 9 bzw. 10 gleitenden Gleitelemente 5, 6 sowohl an seiner Vorderkante 28 wie auch an seiner Hinterkante 29 angehoben wird. Beim Zurückfahren des Frontspriegels 3 wölbt sich zunächst die entspannte Verdeckplane 2 hinter dem Frontspriegel 3, da sie hier ohne feste Verbindung zu einem Spriegel der Verdeckmechanik ist. In Schließstellung des Verdecks 1 ist die Verdeckplane 2 entweder durch Spannung über ein Stützteil, z. B. einen Spriegel, der durch drei Halteelemente 30, 31, 32 schematisch dargestellt ist, in Form gehalten oder sie ist an dem Spriegel befestigt. Der weiter zurückfahrende Frontspriegel 3, auf dem die Verdeckplane 2 befestigt ist, schiebt sich über die dahinterliegende Verdeckplane 2, die sich dabei Z-förmig faltet (Fig. 2), bis in die in Fig. 3 gezeigte Zwischenstellung, in der das Verdeck 1 in Art eines Schiebedaches teilweise geöffnet ist. Dabei befinden sich sowohl das vordere wie auch das hintere Gleitelement 5, 6 des Frontspriegels 3 in der hinteren Führungsschiene 10 am hinteren Dachlenker 12. Jedoch können auch unterschiedliche Zwischenstellungen des Frontspriegels 3 als Fahrstellungen eingestellt werden, wie z. B. die Stellung gemäß Fig. 2. Durch diese translatorische Verschiebung liegt der Frontspriegel 3, der üblicherweise eine sich über die Verdeckbreite erstreckende erhabene Krümmung oder Wölbung aufweist, über dem nächsten festen oder verschiebbaren Spriegel 31, der ebenfalls eine Wölbung aufweist, in gleichbombierter Ausrichtung, d. h. die Wölbungen sind gleichgerichtet. Durch diese Gestaltung wird eine wesentlich geringere Ablagehöhe des Verdecks 1 erzielt.

Zum vollständigen Öffnen des Verdecks 1 wird durch einen Antrieb die Viergelenkanordnung der Verdeckmechanik bewegt, um das Verdeck 1 in eine hintere Ablageposition zu bringen, wobei es gefaltet und in einen Ablageraum abgelegt wird. Dabei wird durch einen z. B. am hinteren Hauptlenker 20 angreifenden Hauptantrieb (nicht dargestellt) dieser Hauptlenker 20 verschwenkt (siehe Fig. 5), wobei durch die Zwangsführung der parallelogrammartigen Viergelenkanordnung der hintere Dachlenker 12 um die beiden Gelenkpunkte 19 und 24 an der Karosserie in im wesentlichen horizontaler Ausrichtung nach hinten parallel verschoben oder versetzt wird.

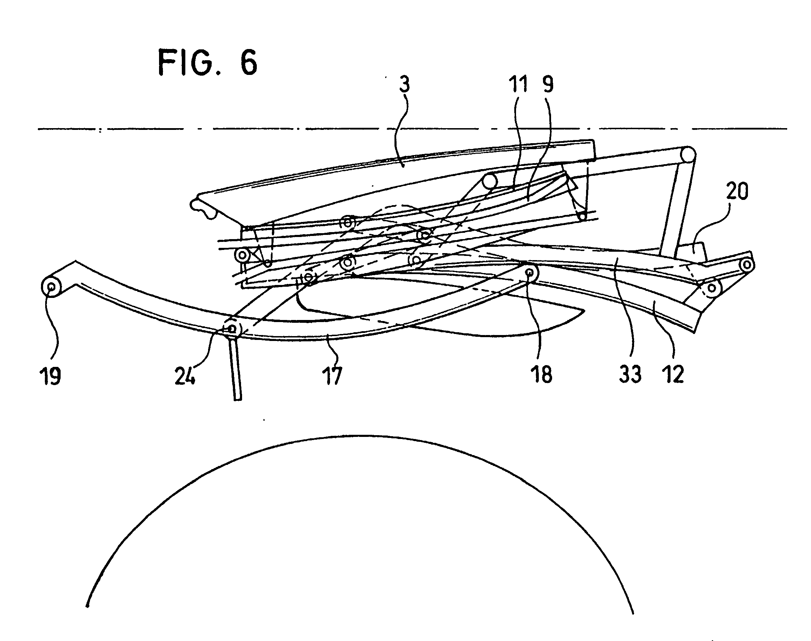

Ein Verbindungslenker 33 (siehe Fig. 5) ist rückseitig über ein Gelenk 34 an der Lagerplatte 21 des Hauptlenkers 20 angelenkt und vorderseitig durch ein Gelenk 35 mit dem zweiten Schwenkhebel 15 der Lenkeranordnung zwischen dem vorderen und dem hinteren Dachlenker 11, 12 gelenkig verbunden. Beim vorangehend beschriebenen Verschwenken der Viergelenkanordnung wird der Verbindungslenker 33 relativ zu dem hinteren Dachlenker 12 nach hinten versetzt und schwenkt oder klappt über die Hilfslenkeranordnung 14, 15, 16 den vorderen Dachlenker 11 um dessen z. B. in etwa senkrecht zur Zeichenebene verlaufende Schwenklagerachse 13 nach hinten und seitlich an dem Frontspriegel 3 vorbei, bis er gemäß Fig. 6 in etwa auf dem hinteren Dachlenker 12 aufliegt. In dieser Stellung ist das Verdeck 1 in dem Ablageraum gefaltet abgelegt, wobei der Frontspriegel 3 und etwaige weitere Verdeckspriegel gleichbombiert und somit platzsparend aufeinander liegen. Damit kann der Frontspriegel 3 als Abdeckung des Ablageraumes genutzt werden.

Das Schließen des Verdecks 1 erfolgt über die beschriebenen Zwischenstellungen in entgegengesetzter Bewegungsrichtung.

Statt des dargestellten Ver- oder Einschwenkens des vorderen Dachlenkers 11 in etwa um eine Fahrzeugquerachse kann das Ver- oder Einschwenken des vorderen Dachlenkers 11 auch in anderen Ebenen erfolgen. Die Hilfslenkeranordnung 14, 15, 16 ist dann dementsprechend modifiziert, um den vorderen Dachlenker 11 auch in anderen Schwenkebenen wie z. B. in einer in etwa horizontalen Ebene anzutreiben, wobei in diesem Fall der rechte und der linke vordere Dachlenker 11 nach dem Einschwenken in etwa in Fahrzeugquerrichtung aneinander anliegen.

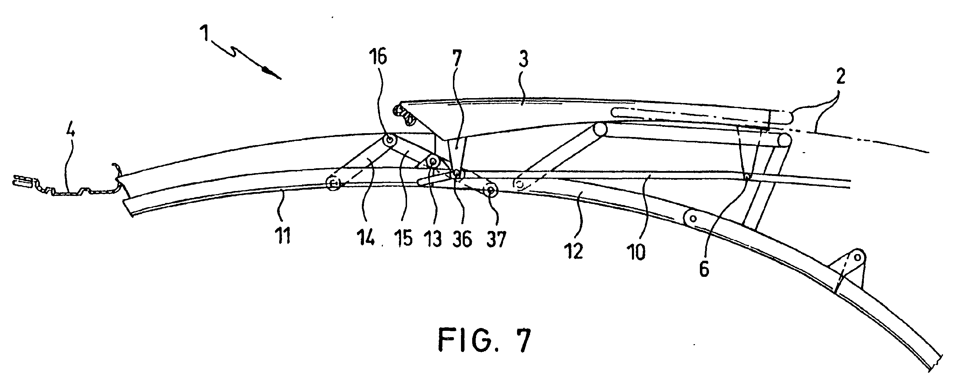

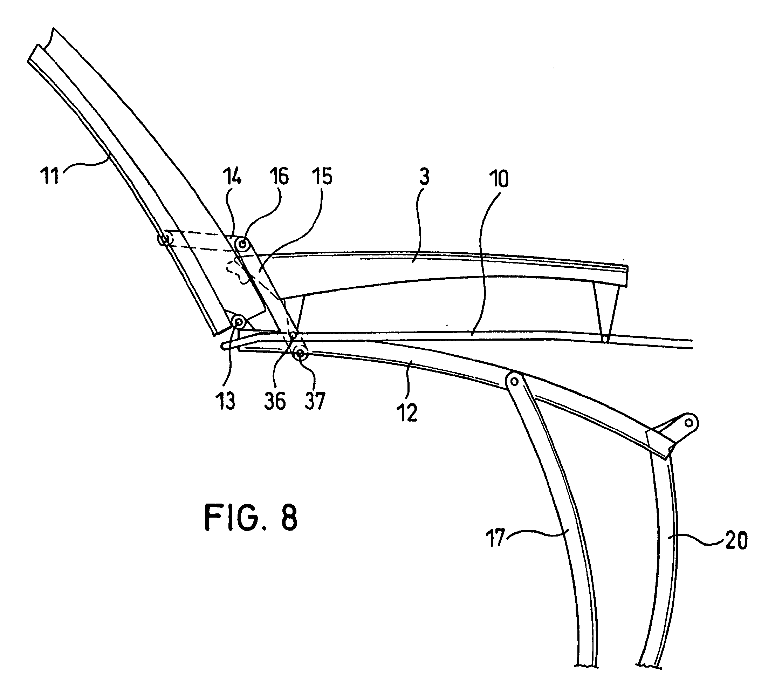

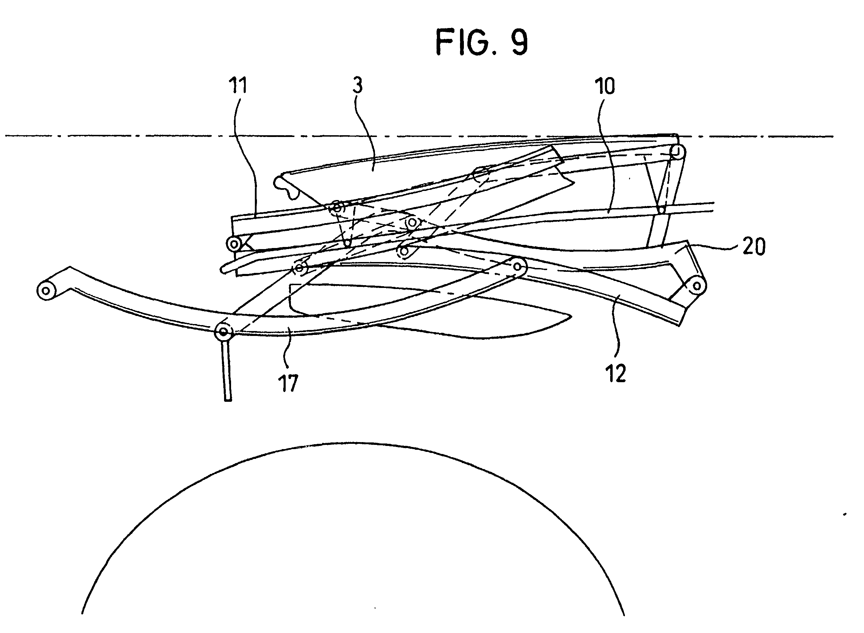

In einer abgewandelten Ausführungsform des Verdecks 1 (siehe Fig. 7 bis 9) wird das Verschwenken des vorderen Dachlenkers 11 durch den Frontspriegel 3 in einer kinematischen Kopplung ausgeführt, indem ein an der vorderen Stütze 7 angeordneter Zapfen 36, der beispielsweise koaxial zu dem Gleitelement 5 angeordnet ist, bei einer Rückwärtsverschiebung des Frontspriegels 3 in Eingriff mit dem zweiten Schwenkhebel 15 der Hilfslenkeranordnung kommt und diesen um seine Anlenkung 37 am hinteren Dachlenker 12 verschwenkt, wobei gleichzeitig über den ersten Schwenkhebel 14 der vordere Dachlenker 11 in der beschriebenen Weise in dem Gelenk 13 verschwenkt wird. Somit ist bei dieser Ausführungsform ein Verbindungshebel 33 nicht erforderlich und das Verschwenken des vorderen Dachlenkers 11 kann durch die Verschiebebewegung des Frontspriegels 3 unabhängig von der durch das Viergelenk übertragenen Ablegebewegung des Verdecks 1 vorgenommen werden.

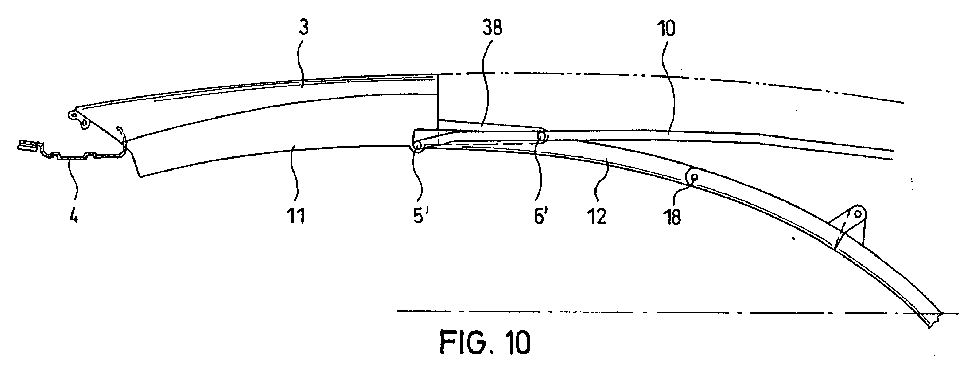

Bei der in den Fig. 10 bis 13 dargestellten Ausführungsform des Verdecks 1 enthält der Frontspriegel 3 als Verdeckspitze die vorderen Dachlenker 11 sowie einen nicht dargestellten Verriegelungsmechanismus zum Verriegeln der vorderen Dachlenker 11 an dem oberen Querholm 4 bzw. dem Frontscheibenrahmen oder der A-Säule.

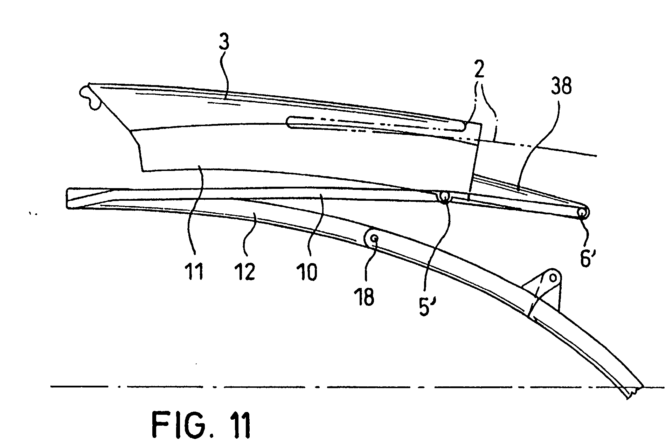

Der Frontspriegel 3 weist beidseits jeweils ein an seiner Rückseite verlängertes und nach hinten überstehendes Stützteil 38 auf, an dem die zwei in Längsrichtung beabstandeten Gleitelemente 5' und 6' gelagert sind, die beide in der Führung 10 des hinteren Dachlenkers 12 angeordnet sind. Wenn der Frontspriegel 3 entlang der Führung 10 translatorisch nach hinten verschoben wird, öffnet sich das Verdeck 1 in der Zwischenstellung gemäß Fig. 11 einschließlich der in den Frontspriegel 3 integrierten vorderen seitlichen Dachlenker 11. Die Verdeckplane 2 bildet wiederum die schon beschriebene Z-Faltung. Bei ausreichender Stabilität der seitlichen Verdeckrahmenteile, d. h. des hinteren Dachlenkers 12 und der Hauptsäule 20 sowie des Hauptlenkers 20, kann diese Zwischenstellung als Fahrstellung eingestellt werden.

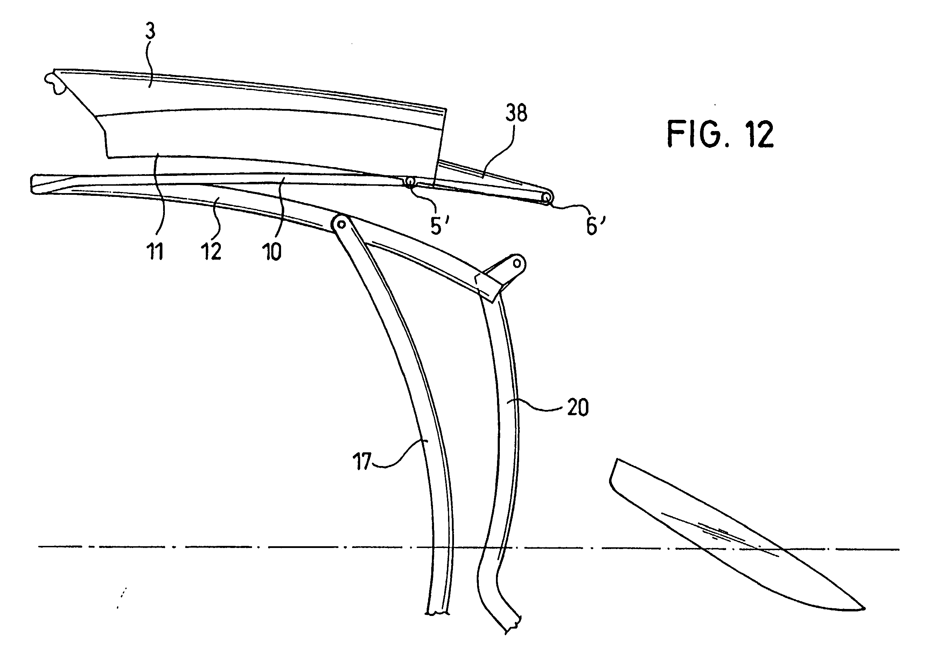

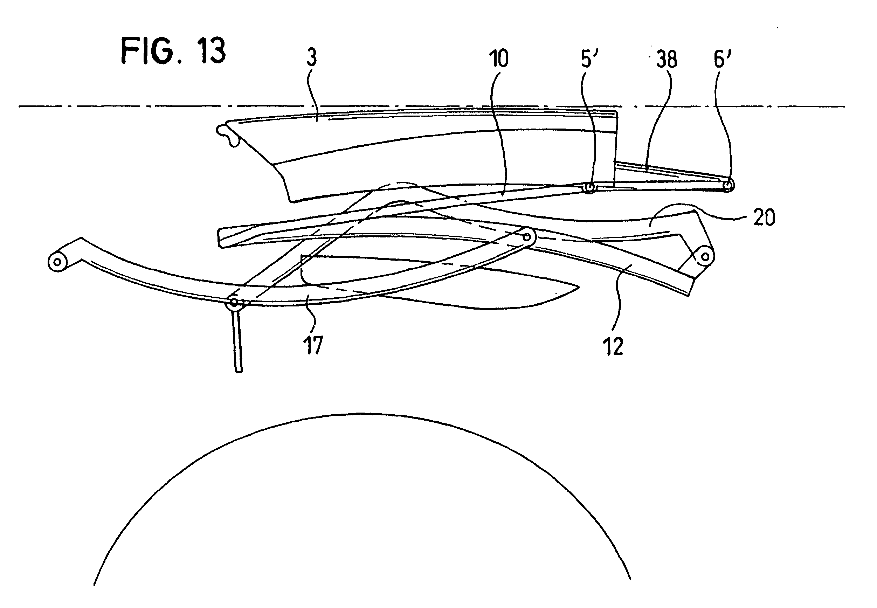

Durch weiteres Verschwenken der Viergelenkanordnung wird das Verdeck 1 über die in der Fig. 12 gezeigte Stellung in die Ablagestellung im Ablageraum gefaltet und versenkt (Fig. 13). Durch den entgegengesetzten Bewegungsablauf kann das Verdeck 1 wieder auseinandergefaltet und über dem Fahrgastraum geschlossen werden.

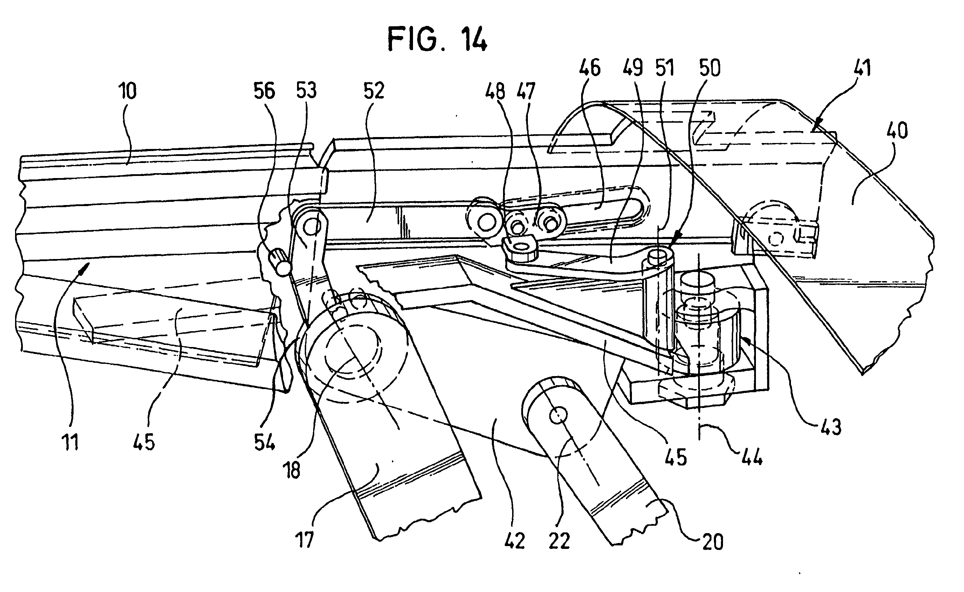

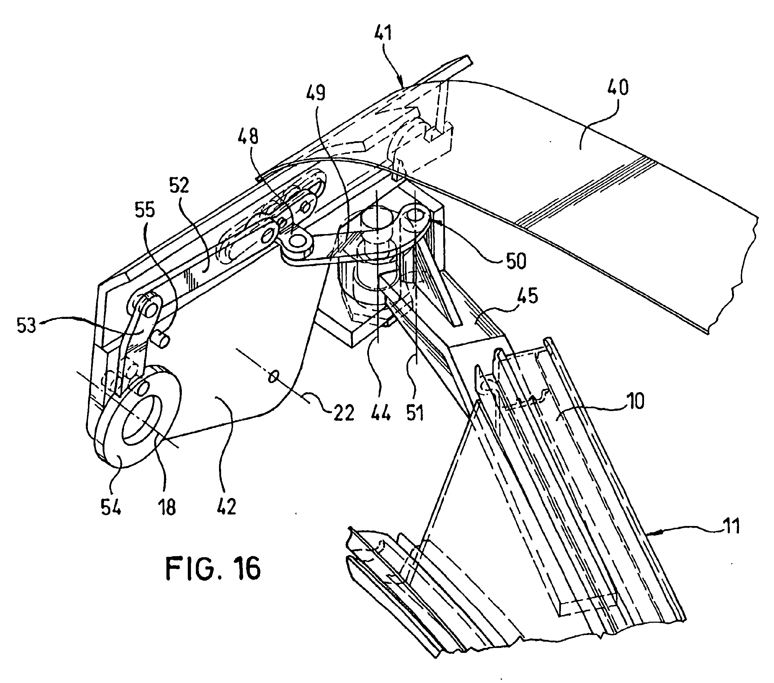

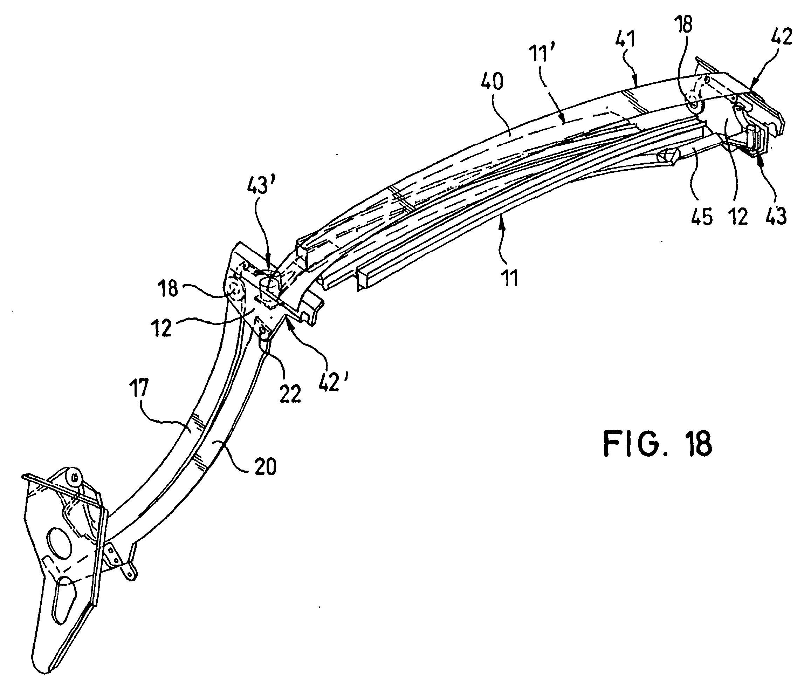

Ein weiteres Ausführungsbeispiel eines Schwenkgelenks, mit dem der vordere Seitenholm oder Dachlenker 11 schwenkbar an dem hinteren Dachlenker 12 gelagert ist, und eine angetriebene Schwenkeinrichtung, die das Verschwenken des vorderen Dachlenkers 11 ausführt, ist in den Fig. 14 bis 18 dargestellt. Der hintere rechte Dachlenker 12 bildet hierbei mit einem Hauptspriegel 40 und dem gegenüberliegenden linken Dachlenker 12' (siehe Fig. 18) eine feste Baueinheit oder Dachkassette 41 und wird daher auch als Dachkassetten-Seitenteil 42 bezeichnet. Das Dachkassetten-Seitenteil 42 bzw. 42' stellt das obere Verbindungsteil der Viergelenkanordnung dar und ist an dem Schwenklager 18 durch die Hauptsäule 20 und an dem Schwenklager 22 durch den Hauptlenker 20 gehalten.

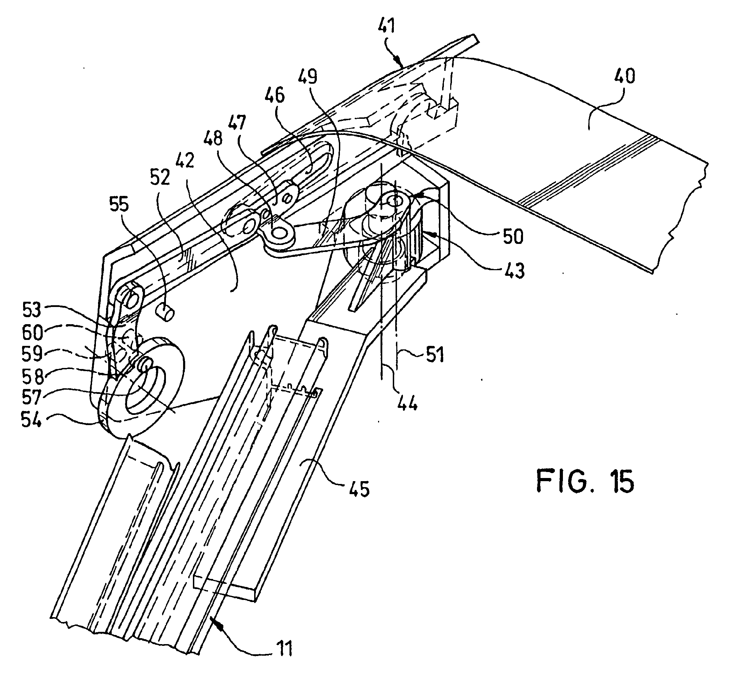

Das Dachkassetten-Seitenteil 42 enthält an seiner Innenseite ein Schwenklager 43 (siehe Fig. 14) mit einer die Schwenkebene des Dachlenkers 11 vorgebenden und insbesondere in etwa senkrecht ausgerichteten Schwenkachse 44 zur Schwenklagerung eines Trägers 45, der mit dem vorderen Seitenholm oder Dachlenker 11 fest verbunden ist. In dem Dachkassetten-Seitenteil 42 ist eine horizontale Langlochführung 46 ausgebildet, in der ein Schiebeteil 47 verschiebbar aufgenommen ist. Das Schiebeteil 47 hat eine seitlich einwärts hervorstehende Nase 48, an der ein Zwischenlenker 49 schwenkbar angelenkt ist. Der Zwischenlenker 49 ist andererseits in einem Schwenkgelenk 50 an dem Träger 45 um eine senkrechte Schwenkachse 51 schwenkbar gelagert, wobei die Schwenkachse 51 zur Schwenkachse 44 beabstandet ist und bei ausgeklappter Dachlenkeranordnung gemäß Fig. 14 eine Dreiecksanordnung mit der Schwenkachse 44 und der Anlenkung an der Nase 48 bildet, so daß ein rückwärtsgerichtetes Verschieben des Schiebeteils 47 aus der in Fig. 14 gezeigten Stellung das Schwenkgelenk 50 und somit den Träger 45 mit dem Dachlenker 11 um die Schwenkachse 44 einwärts verschwenkt (siehe Fig. 15 bis 17).

Das Schiebeteil 47 ist über einen Zwischenlenker 52 mit einem Hebelarm 53 eines Ringes 54 gelenkig verbunden. Der Ring 54 ist an dem Dachkassetten-Seitenteil 42 konzentrisch zur Schwenklagerachse 18 der Hauptsäule 20 und an dieses angrenzend schwenkbar gelagert und mit der Hauptsäule 20 derart drehfest koppelbar, daß die Hauptsäule 20 über einen bestimmten Schwenkwinkel ihres Schwenkweges gegenüber dem Dachkassetten-Seitenteil 42 den Ring 54 mitnimmt, wodurch über die beschriebenen Elemente der Dachlenker 11 verschwenkt wird.

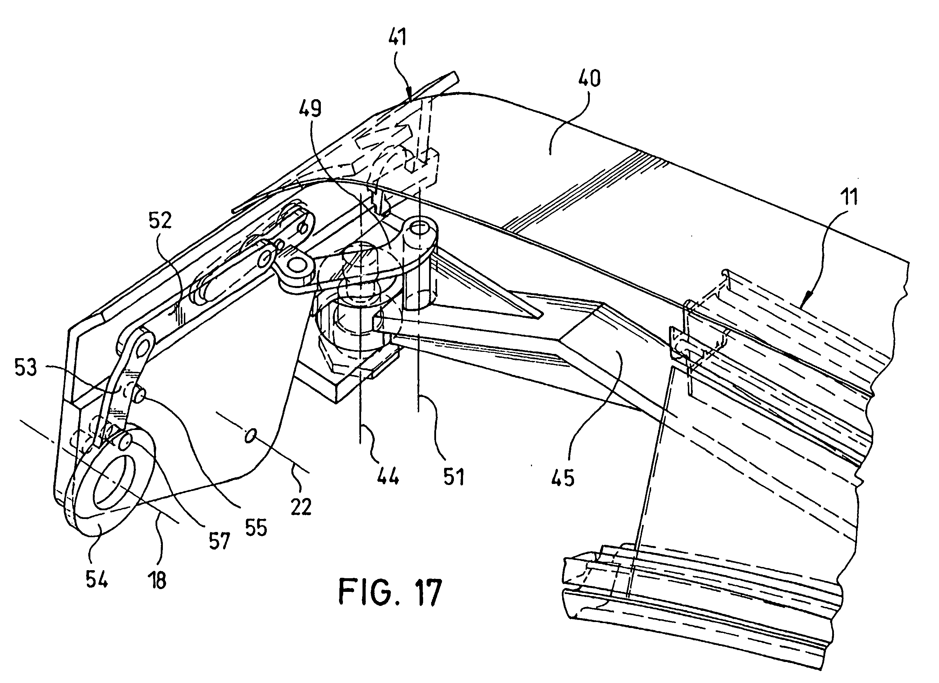

Durch einen Anschlag 55 an dem Dachkassetten-Seitenteil 42 (siehe Fig. 17) und einen Anschlag 56 an dem verschwenkbaren Dachlenker 11 (siehe Fig. 14) ist der Schwenkweg des Ringes 54 und somit der Schwenkwinkel des Dachlenkers 11 definiert begrenzt. Die Anschläge 55, 56 können stiftartige Vorsprünge oder dergleichen sein.

Eine Riegeleinrichtung zum drehfesten Ankoppeln des Ringes 54 an die Hauptsäule 17 über einen bestimmten Schwenkbereich der Hauptsäule relativ zu dem Dachkassetten-Seitenteil 42 enthält einen Riegelstift 57 (siehe Fig. 15), der in einer Bohrung 58 des Ringes 54 gelagert und von einem Federelement gegen die an dem Ring 54 anliegende Seite der Hauptsäule 17 gedrückt wird. In der Hauptsäule 17 ist eine Aussparung ausgebildet, in die der Riegelstift 57 teilweise hineingedrückt wird, wenn sie beim Verschwenken der Hauptsäule deckungsgleich zu dem Riegelstift 57 angeordnet ist, so daß eine drehfeste Koppelung zwischen der Hauptsäule 17 und dem Ring 54 gebildet ist. Nach dem vorgesehenen gemeinsamen Verschwenkweg wird der Riegelstift 57 aus der Aussparung der Hauptsäule 17 herausgedrückt und greift dabei teilweise in eine von zwei Bohrungen 59 und 60 ein, die gegenüberliegend zu der Hauptsäule 17 in dem Dachkassetten-Seitenteil 42 angeordnet sind.

Somit ist die Drehkoppelung wieder aufgehoben und die Hauptsäule 17 kann in beiden Schwenkrichtungen weiter verschwenkt werden, ohne daß eine Zwangskoppelung mit dem Dachlenker 11 besteht. Die beiden Bohrungen 59 und 60 sind derart positioniert, daß sie über den Riegelstift 57 den beiden Schwenkendstellungen des Ringes 54 zugeordnet sind.

An dem gegenüberliegenden linken Dachkassetten-Seitenteil 42' (siehe Fig. 18) ist das Schwenkgelenk 43' gegenüber dem Schwenkgelenk 43 des rechten Dachkassetten-Seitenteils 42 in Verdeck- oder Fahrzeuglängsrichtung nach vorne versetzt, so daß der linke eingeschwenkte Dachlenker 11 in Querausrichtung in etwa parallel vor dem rechten eingeschwenkten Dachlenker 11 liegt.

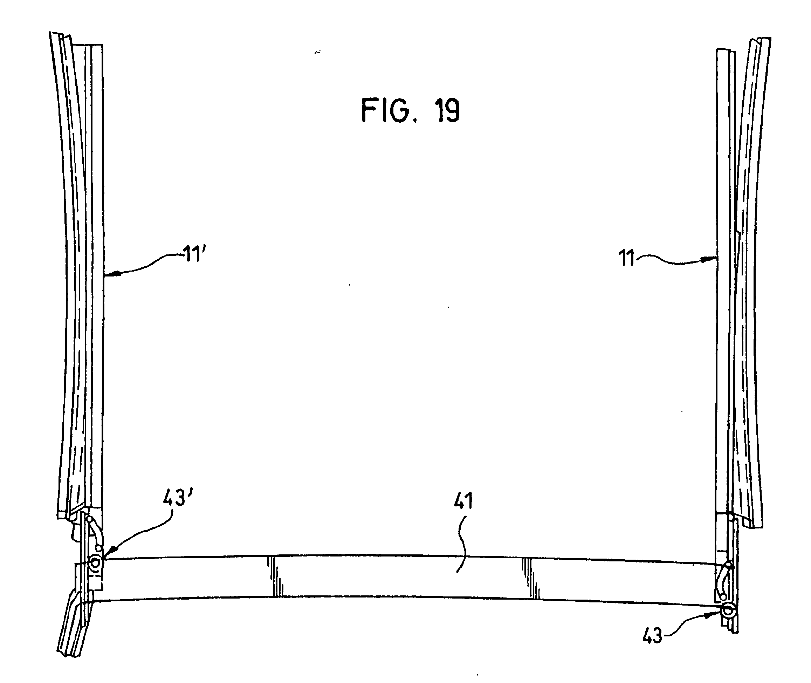

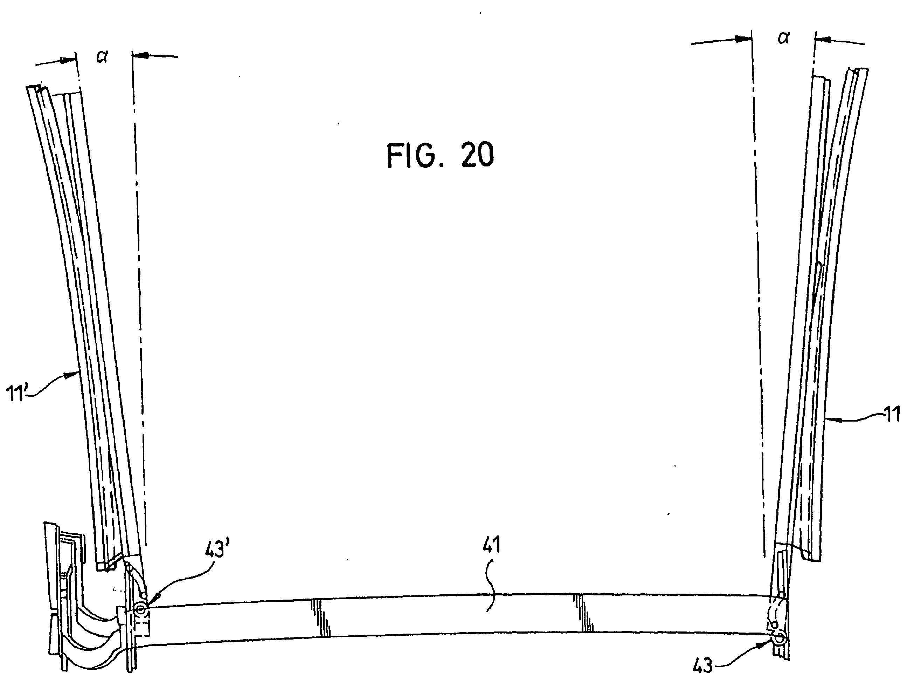

In den Fig. 19 und 20 ist eine Verdeckmechanik mit beidseitigen vorderen Seitenholmen oder Dachlenkern 11 dargestellt, die mit einer gegenüber dem voranstehend beschriebenen Ausführungsbeispiel abgewandelten Gelenk- und Verschwenkanordnung beim Zurückschwenken der Dachkassette 41 in die Ablagestellung um einen bestimmten Winkel α nach außen verschwenkt werden, so daß die Dachlenker 11 beim Ablegen in den Ablageraum neben der Hauptsäule 17 und dem Hauptlenker 20 in der Seitenverkleidung untergebracht werden können. Dieser Winkel α ist von der konkreten Anordnung abhängig und beträgt beispielsweise etwa 8 bis 10°.

### Bezugszeichenliste

- 1: Verdeck
- 2: Verdeckplane
- 3: Frontspriegel
- 4: Querholm
- 5,6: Gleitelement
- 7,8: Stützen (von 3)
- 9,10: Führungsschiene
- 11,12: Dachlenker
- 13: Gelenk
- 14: erster Schwenkhebel (der Hilfslenkeranordnung)
- 15: zweiter Schwenkhebel (der Hilfslenkeranordnung)
- 15: Gelenk (der Hilfslenkeranordnung)
- 16: Gelenk
- 17: Hauptsäule
- 18: Gelenk
- 19: Gelenk
- 20: Hauptlenker
- 21: Lagerplatte
- 22: Schwenkgelenk
- 23: seitlicher Ansatz
- 24: Gelenk
- 25: Dichtung
- 26, 27: Steigungsabschnitt
- 28: Vorderkante (von 3)
- 29: Hinterkante (von 3)
- 30,31,32: Halteelemente (Spriegel)
- 33: Verbindungslenker
- 34,35: Gelenk
- 36: Zapfen
- 37: Anlenkung
- 38: Stützteil
- 40: Hauptspriegel
- 41: Dachkassette
- 42: Dachkassetten-Seitenteil
- 43: Schwenklager
- 44: Schwenkachse
- 45: Träger
- 46: Langlochführung
- 47: Schiebeteil
- 48: Nase
- 49: Zwischenlenker
- 50: Schwenkgelenk
- 51: Schwenkachse
- 52: Zwischenlenker
- 53: Hebelarm
- 54: Ring
- 55,56: Anschlag
- 57,58: Riegelstift
- 59,60: Bohrung

## Patentansprüche

1. Verdeck für ein Cabriolet mit einer an einem Frontspriegel befestigten Verdeckplane, die mit einer seitliche Dachlenker umfassenden Verdeckmechanik zum Öffnen des Verdecks in eine hintere Ablagestellung bewegbar ist, **dadurch gekennzeichnet, daß** der Frontspriegel (3) beidseits an Führungen (9, 10) der seitlichen Dachlenker (11, 12) längsverschiebbar geführt ist, so daß durch eine Rückwärtsverschiebung des Frontspriegels (3) entlang der seitlichen Führungen (9, 10) aus seiner Schließstellung, in der er sich an einem vorderen Querholm (4) anlegt, in eine Zwischenstellung eine Teilöffnung des Verdecks (1) einstellbar ist.

2. Verdeck nach Anspruch 1, **dadurch gekennzeichnet, daß** die seitlichen Dachlenker jeweils in einen vorderen und einen hinteren Dachlenker (11 bzw. 12) unterteilt sind, die in der Schließposition des Verdecks (1) einen im wesentlichen starren, an den Querholm (4) angekoppelten Verdeckrahmen bilden und in der Ablagestellung des geöffneten Verdecks (1) aus der starren Kopplung gelöst und in Kompaktanordnung untergebracht sind.

3. Verdeck nach Anspruch 2, **dadurch gekennzeichnet, daß** der Frontspriegel (3) die vorderen Dachlenker (11) enthält, an den Führungen (10) der hinteren Dachlenker (12) gelagert und zusammen mit den vorderen Dachlenkern (11) in eine Zwischenstellung verschiebbar ist.

4. Verdeck nach Anspruch 2, **dadurch gekennzeichnet, daß** der Frontspriegel (3) in seiner Schließstellung an den Führungen (9) der vorderen Dachlenker (11), an den Führungen (9, 10) der vorderen und der hinteren Dachlenker (11, 12) oder nur an den Führungen (10) der hinteren Dachlenker (12) verschiebbar gelagert ist.

5. Verdeck nach Anspruch 4, **dadurch gekennzeichnet, daß** beim Verschieben des Frontspriegels (3) aus seiner Schließstellung in eine Zwischenstellung die vorderen Dachlenker (11) mit dem Querholm (4) gekoppelt bleiben.

6. Verdeck nach einem der Ansprüche 2 bis 5, **dadurch gekennzeichnet, daß** der Frontspriegel (3) in einer definierten Zwischenstellung an den Führungen (10) der hinteren Dachlenker (12) gelagert ist.

7. Verdeck nach einem der Ansprüche 2 bis 6, **dadurch gekennzeichnet, daß** der vordere und der hintere Dachlenker (11, 12) durch ein Schwenkgelenk (13) schwenkbar miteinander verbunden sind und daß zum Ablegen des Verdecks (1) in die Ablagestellung die vorderen Dachlenker (11) verschwenkt werden.

8. Verdeck nach Anspruch 7, **dadurch gekennzeichnet, daß** die Schwenkbewegung der vorderen Dachlenker (11) in einer in etwa horizontalen Fahrzeugebene oder in etwa um eine Fahrzeugquerachse erfolgt.

9. Verdeck nach Anspruch 8, **dadurch gekennzeichnet, daß** die Schwenkbewegung der vorderen Dachlenker (11) eine in das Verdeck gerichtete Einschwenkbewegung oder eine nach außen gerichtete Ausschwenkbewegung ist, wobei die Ausschwenkbewegung um einen Winkel (α) von insbesondere etwa 8-10° erfolgt.

10. Verdeck nach einem der Ansprüche 2 bis 9, **dadurch gekennzeichnet, daß** die hinteren Dachlenker (12) über eine jeweilige parallelogrammartige Viergelenkanordnung, die eine Hauptsäule (17) und einen Hauptlenker (20) enthält, an der Karosserie schwenkbar gelagert sind.

11. Verdeck nach Anspruch 10, **dadurch gekennzeichnet, daß** die Viergelenkanordnung über eine Verbindungslenkereinrichtung mit dem vorderen Dachlenker (11) koppelt ist und während ihrer Schwenkbewegung zum Ablegen des Verdecks (1) in die Ablagestellung das Einschwenken des vorderen Dachlenkers (11) über diese Verbindungslenkereinrichtung ausführt.

12. Verdeck nach Anspruch 11, **dadurch gekennzeichnet, daß** ein Verbindungslenker (33) der Verbindungslenkereinrichtung einerseits an einem Überstand (21) des Hauptlenkers (20), der über seine Gelenkverbindung (22) mit dem hinteren Dachlenker (12) hinaussteht, schwenkbar angelenkt ist und andererseits mit dem vorderen Dachlenker (11) oder mit einer zwischengeschalteten, Hilfslenkeranordnung (14, 15, 16) gekoppelt ist.

13. Verdeck nach Anspruch 11 oder 12, **dadurch gekennzeichnet, daß** der linke und der rechte vordere Dachlenker (11) von der Verbindungslenkereinrichtung zeitversetzt verschwenkt werden.

14. Verdeck nach einem der Ansprüche 11 bis 13, **dadurch gekennzeichnet, daß** die Verbindungslenkereinrichtung eine variierende Antriebsgeschwindigkeit für das Verschwenken des vorderen Dachlenkers (11) bereitstellt.

15. Verdeck nach einem der Ansprüche 11 bis 14, **dadurch gekennzeichnet, daß** die Verbindungslenkereinrichtung (47, 48, 49, 52, 53, 54) von der schwenkenden Hauptsäule (17) angetrieben ist.

16. Verdeck nach einem der Ansprüche 11 bis 15, **dadurch gekennzeichnet, daß** die Verbindungslenkereinrichtung über eine Riegeleinrichtung (57, 58, 59, 60) mit der Hauptsäule (17) oder dem Hauptlenker (20) koppelbar und über einen definierten Schwenkweg der Hauptsäule (17) oder des Hauptlenkers (20) in Antriebseingriff gekoppelt ist.

17. Verdeck nach Anspruch 15 oder 16, **dadurch gekennzeichnet, daß** die Verbindungslenkereinrichtung einen konzentrisch zur Schwenklagerachse (18) der Hauptsäule (17) oder zu einem Schwenkgelenk (22) des Hauptlenkers (20) und neben der Hauptsäule (17) oder dem Hauptlenker (20) schwenkbar gelagerten Ring (54) aufweist, der über seinen Hebelarm (53) und über Zwischenlenker und Gelenke der Verbindungslenkereinrichtung mit dem Dachlenker (11) in Antriebsverbindung ist.

18. Verdeck nach Anspruch 17, **dadurch gekennzeichnet, daß** die Riegeleinrichtung einen Riegelstift (58) aufweist, der in dem Ring (54) axial verschiebbar gelagert ist und in Abhängigkeit von der Schwenkstellung der Hauptsäule (17) oder des Hauptlenkers (20) zum Dachkassetten-Seitenteil (42) in einen Koppeleingriff mit der Hauptsäule (17) oder dem Hauptlenker (20) verschoben ist.

19. Verdeck nach einem der Ansprüche 15 bis 18, **dadurch gekennzeichnet, daß** ein Bewegungsweg der Verbindungslenkereinrichtung, insbesondere des Hebelarms (53) des Ringes (54), durch Anschläge (55, 56) begrenzt ist.

20. Verdeck nach einem der Ansprüche 15 bis 19, **dadurch gekennzeichnet, daß** die an den beidseitigen Dachkassetten-Seitenteilen (42) angeordneten und eine senkrechte Schwenkachse (44) aufweisenden Schwenkgelenke (43) des rechten und des linken vorderen Dachlenkers (11) bezüglich der Verdeck-Längsachse gegeneinander versetzt sind.

21. Verdeck nach einem der Ansprüche 7 bis 10, **dadurch gekennzeichnet, daß** der Frontspriegel (3) bei einer weiteren Rückwärtsverschiebung aus einer definierten Zwischenstellung eine Hilfslenkeranordnung (14, 15, 16) zum Verschwenken oder Einschwenken der vorderen Dachlenker (11) betätigt.

22. Verdeck nach einem der Ansprüche 7 bis 10, **dadurch gekennzeichnet, daß** die vorderen Dachlenker (11) über einen Zusatzantrieb verschwenkbar sind.

23. Verdeck nach einem der Ansprüche 1 bis 22, **dadurch gekennzeichnet, daß** ein Antrieb für den Frontspriegel (3) an einem hinteren Dachlenker (12), einem Hauptspriegel (30, 31, 32) oder einer Dachkassette angeordnet und über Kabel- oder Bowdenzüge mit dem Frontspriegel (3) verbunden ist.

24. Verdeck nach einem der Ansprüche 1 bis 23, **dadurch gekennzeichnet, daß** eine jeweilige Verschiebebewegung des Frontspriegels (3) aus einer geöffneten Zwischenstellung eine Verriegelungseinrichtung zum Festlegen der Dachlenker (11) an dem Querholm (4) ver- bzw. entriegelt.

25. Verdeck nach einem der Ansprüche 1 bis 24, **dadurch gekennzeichnet, daß** der Frontspriegel (3) mittels Gleitelementen (5, 6) an den Führungen (9, 10) gelagert ist.

26. Verdeck nach einem der Ansprüche 1 bis 25, **dadurch gekennzeichnet, daß** die Führungen (9, 10) Steigungsabschnitte (26, 27) aufweisen, die den Frontspriegel (3) beim Öffnen aus seiner Schließstellung anheben.

27. Verdeck nach einem der Ansprüche 2 bis 26, **dadurch gekennzeichnet, daß** die vorderen Dachlenker (11) jeweils aus zwei hintereinander angeordneten und durch ein Gelenk miteinander verbundenen Dachlenkerelementen aufgebaut sind.

28. Verdeck nach einem der Ansprüche 1 bis 27, **dadurch gekennzeichnet, daß** der Frontspriegel (3) eine Abdeckung für einen Ablageraum bildet.

## Claims

1. Hood for a convertible, having a hood canvas which is attached to a front hoop and which can be moved into a rear lowered position by a hood mechanism comprising a side roof rod for opening the hood, **characterized in that** the front hoop (3) is guided such that it can be displaced longitudinally on guides (9, 10) of the side roof rods (11, 12), so that, by means of a rearward displacement of the front hoop (3) along the side guides (9, 10), from its closed position, in which it rests on a front crossmember (4), into an intermediate position, a partial opening of the hood (1) can be set.

2. Hood according to Claim 1, **characterized in that** the side roof rods are each divided into a front roof rod and a rear roof rod (11 and 12) which, in the closed position of the hood (1), form an essentially rigid hood frame which is coupled to the crossmember (4), and which, in the lowered position of the opened hood (1), are released from the rigid coupling and are accommodated in a compact arrangement.

3. Hood according to Claim 2, **characterized in that** the front hoop (3) contains the front roof rods (11), is supported on the guides (10) of the rear roof rods (12) and can be displaced together with the front roof rods (11) into an intermediate position.

4. Hood according to Claim 2, **characterized in that**, in its closed position, the front hoop (3) is mounted such that it can be displaced on the guides (9) of the front roof rod (11), on the guides (9, 10) of the front and rear roof rods (11, 12) or only on the guides (10) of the rear roof rods (12).

5. Hood according to Claim 4, **characterized in that**, when the front hoop (3) is displaced from its closed position into an intermediate position, the front roof rods (11) remain coupled to the crossmember (4).

6. Hood according to one of Claims 2 to 5, **characterized in that**, in a defined intermediate position, the front hoop (3) is supported on the guides (10) of the rear roof rods (12).

7. Hood according to one of Claims 2 to 6, **characterized in that** the front and the rear roof rods (11, 12) are pivotably connected to each other by a pivot joint (13), and **in that** the front roof rods (11) are pivoted in order to lower the hood (1) into the lowered position.

8. Hood according to Claim 7, **characterized in that** the pivoting movement of the front roof rods (11) takes place in an approximately horizontal vehicle plane or approximately about a vehicle transverse axis.

9. Hood according to Claim 8, **characterized in that** the pivoting movement of the front roof rods (11) is an inward pivoting movement directed into the hood or an outward pivoting movement directed outwards, the outward pivoting movement being carried out through an angle (α) of in particular about 8-10°.

10. Hood according to one of Claims 2 to 9, **characterized in that** the rear roof rod (12) is pivotably mounted on the body via a parallelogram-like four-bar arrangement which contains a main column (17) and a main connecting rod (20).

11. Hood according to Claim 10, **characterized in that** the four-bar arrangement is coupled to the front roof rod (11) via a connecting rod device and, during its pivoting movement in order to lower the hood (1) into the lowered position, pivots the front roof rod (11) via this connecting rod device.

12. Hood according to Claim 11, **characterized in that** a connecting rod (33) of the connecting rod device is pivotably attached at one end to a projection (21) of the main connecting rod (20), which projects beyond its jointed connection (22) to the rear roof rod (12), and is coupled at the other end to the front roof rod (11) or to an interposed auxiliary rod arrangement (14, 15, 16).

13. Hood according to Claim 11 or 12, **characterized in that** the left-hand and the right-hand front roof rod (11) are pivoted at different times by the connecting rod device.

14. Hood according to one of Claims 11 to 13, **characterized in that** the connecting rod device provides a varying drive speed for pivoting the front roof rod (11).

15. Hood according to one of Claims 11 to 14, **characterized in that** the connecting rod device (47, 48, 49, 52, 53, 54) is driven by the pivoting main column (17).

16. Hood according to one of Claims 11 to 15, **characterized in that** the connecting rod device can be coupled to the main column (17) or the main connecting rod (20) via a locking device (57, 58, 59, 60) and is coupled in a drive engagement over a defined pivot path of the main column (17) and the main connecting rod (20).

17. Hood according to claim 15 or 16, **characterized in that** the connecting rod device has a ring (54) which is pivotably mounted concentrically with the pivot bearing axis (18) of the main column (17) or with a pivot joint (22) of the main connecting rod (20) and beside the main column (17) or the main connecting rod (20) and has a drive connection to the roof rod (11) via its lever arm (53) and via intermediate rods and joints of the connecting rod device.

18. Hood according to Claim 17, **characterized in that** the locking device has a locking pin (58) which is mounted in the ring (54) such that it can be displaced axially and, depending on the pivoted position of the main column (17) or the main connecting rod (20) in relation to the roof cassette side part (42), is displaced into a coupling engagement with the main column (17) or the main connecting rod (20).

19. Hood according to one of Claims 15 to 18, **characterized in that** a movement travel of the connecting rod device, in particular of the lever arm (53) of the ring (54), is limited by stops (55, 56).

20. Hood according to one of Claims 15 to 19, **characterized in that** the pivot joints (43) of the right-hand and left-hand front roof rod (11), which are arranged on the roof cassette side parts (42) on both sides and have a vertical pivot axis (44), are offset in relation to each other with respect to the hood longitudinal axis.

21. Hood according to one of Claims 7 to 10, **characterized in that**, during a further rearward displacement from a defined intermediate position, the front hoop (3) actuates an auxiliary rod arrangement (14, 15, 16) for pivoting or pivoting in the front roof rod (11).

22. Hood according to one of Claims 7 to 10, **characterized in that** the front roof rod (11) can be pivoted by an additional drive.

23. Hood according to one of Claims 1 to 22, **characterized in that** a drive for the front hoop (3) is arranged on a rear roof rod (12), a main hoop (30, 31, 32) or a roof cassette and is connected to the front hoop (3) via cables or Bowden cables.

24. Hood according to one of Claims 1 to 23, **characterized in that** a respective displacement movement of the front hoop (3) from an open intermediate position locks or unlocks a locking device for fixing the roof rods (11) to the crossmember (4).

25. Hood according to one of Claims 1 to 24, **characterized in that** the front hoop (3) is supported on the guides (9, 10) by means of sliding elements (5, 6).

26. Hood according to one of Claims 1 to 25, **characterized in that** the guides (9, 10) have rising sections (26, 27) which lift the front hoop (3) out of its closed position during opening.

27. Hood according to one of Claims 2 to 26, **characterized in that** the front roof rods (11) are in each case constructed from two roof rod elements arranged one after another and connected to one another by a joint.

28. Hood according to one of Claims 1 to 27, **characterized in that** the front hoop (3) forms a covering for a storage space.

## Revendications

1. Capote pour cabriolet, équipée d'une toile fixée à un arceau frontal et pouvant être amenée à une position postérieure de dégagement, en vue de l'ouverture de la capote, par un mécanisme de capotage comprenant des biellettes latérales de pavillon, **caractérisée par le fait que** l'arceau frontal (3) est guidé à coulissement longitudinal de part et d'autre sur des guides (9, 10) des biellettes latérales de pavillon (11, 12), de sorte qu'une ouverture partielle de la capote (1) peut être réglée par un coulissement rétrograde de l'arceau frontal (3) vers une position intermédiaire, le long des guides latéraux (9, 10), à partir de sa position fermée dans laquelle il s'applique contre une entretoise antérieure (4).

2. Capote selon la revendication 1, **caractérisée par le fait que** les biellettes latérales de pavillon sont respectivement scindées en des biellettes (11, respectivement 12) antérieure et postérieure qui, dans la position fermée de ladite capote (1), forment un cadre de capote sensiblement rigide, accouplé à l'entretoise antérieure (4) ; et qui, dans la position de dégagement de la capote (1) ouverte, sont libérées de l'accouplement rigide et regroupées en un ensemble ramassé.

3. Capote selon la revendication 2, **caractérisée par le fait que** l'arceau frontal (3) englobe les biellettes antérieures (11) de pavillon, est monté sur les guides (10) des biellettes postérieures (12) de pavillon et peut être amené par coulissement à une position intermédiaire, conjointement auxdites biellettes antérieures (11) de pavillon.

4. Capote selon la revendication 2, **caractérisée par le fait que**, dans sa position fermée, l'arceau frontal (3) est monté à coulissement sur les guides (9) des biellettes antérieures (11) de pavillon, sur les guides (9, 10) des biellettes de pavillon (11, 12) antérieures et postérieures, ou bien uniquement sur les guides (10) des biellettes postérieures (12) de pavillon.

5. Capote selon la revendication 4, **caractérisée par le fait que** les biellettes antérieures (11) de pavillon demeurent accouplées à l'entretoise antérieure (4) lors du coulissement de l'arceau frontal (3) de sa position fermée à une position intermédiaire.

6. Capote selon l'une des revendications 2 à 5, **caractérisée par le fait que** l'arceau frontal (3) est monté, dans une position intermédiaire bien définie, sur les guides (10) des biellettes postérieures (12) de pavillon.

7. Capote selon l'une des revendications 2 à 6, **caractérisée par le fait que** les biellettes de pavillon (11, 12) antérieure et postérieure sont reliées l'une à l'autre de manière pivotante, par l'intermédiaire d'une articulation pivotante (13) ; et **par le fait que** les biellettes antérieures (11) de pavillon sont animées d'un pivotement jusqu'à la position de dégagement, en vue de l'escamotage de la capote (1).

8. Capote selon la revendication 7, **caractérisée par le fait que** le mouvement pivotant des biellettes antérieures (11) de pavillon s'effectue dans un plan sensiblement horizontal du véhicule, ou sensiblement selon un axe transversal dudit véhicule.

9. Capote selon la revendication 8, **caractérisée par le fait que** le mouvement pivotant des biellettes antérieures (11) de pavillon est un mouvement de pivotement rentrant dirigé dans ladite capote, ou un mouvement de pivotement sortant dirigé vers l'extérieur, ledit mouvement de pivotement sortant s'opérant autour d'un angle (α) mesurant notamment environ 8-10°.

10. Capote selon l'une des revendications 2 à 9, **caractérisée par le fait que** les biellettes postérieures (12) de pavillon sont montées à pivotement sur la carrosserie par l'intermédiaire d'un ensemble respectif à quatre articulations, du type parallélogramme, qui comprend une colonne principale (17) et une biellette principale (20).

11. Capote selon la revendication 10, **caractérisée par le fait que** l'ensemble à quatre articulations est accouplé à la biellette de pavillon (11) antérieure par l'intermédiaire d'un système à biellettes de solidarisation et assure le pivotement rentrant de ladite biellette de pavillon (11) antérieure, par l'intermédiaire de ce système à biellettes de solidarisation, au cours de son mouvement pivotant visant à escamoter la capote (1) vers la position de dégagement.

12. Capote selon la revendication 11, **caractérisée par le fait qu'**une biellette de solidarisation (33) du système à biellettes de solidarisation est, d'une part, articulée de manière pivotante sur une zone débordante (21) de la biellette principale (20), faisant saillie au-delà de sa liaison articulée (22) avec la biellette de pavillon (12) postérieure ; et est accouplée, d'autre part, avec la biellette de pavillon (11) antérieure ou avec un système à biellettes auxiliaires (14, 15, 16) occupant une position intercalaire.

13. Capote selon la revendication 11 ou 12, **caractérisée par le fait que** les biellettes de pavillon (11) antérieures, de gauche et de droite, sont animées de pivotements par le système à biellettes de solidarisation, avec décalage temporel.

14. Capote selon l'une des revendications 11 à 13, **caractérisée par le fait que** le système à biellettes de solidarisation confère une vitesse d'entraînement variable pour le pivotement de la biellette de pavillon (11) antérieure.

15. Capote selon l'une des revendications 11 à 14, **caractérisée par le fait que** le système à biellettes de solidarisation (47, 48, 49, 52, 53, 54) est entraîné par la colonne principale (17) accomplissant un pivotement.

16. Capote selon l'une des revendications 11 à 15, **caractérisée par le fait que** le système à biellettes de solidarisation peut être accouplé à la colonne principale (17) ou à la biellette principale (20) par l'intermédiaire d'un système de verrouillage (57, 58, 59, 60), et peut être mis en prise d'entraînement grâce à une course de pivotement bien définie de ladite colonne principale (17) ou de ladite biellette principale (20).

17. Capote selon la revendication 15 ou 16, **caractérisée par le fait que** le système à biellettes de solidarisation présente une bague (54) qui est montée à pivotement concentriquement par rapport à l'axe (18) de portée pivotante de la colonne principale (17) ou par rapport à une articulation pivotante (22) de la biellette principale (20), et à côté de ladite colonne principale (17) ou de ladite biellette principale (20) ; et est en liaison d'entraînement avec la biellette de pavillon (11) par l'intermédiaire de son bras de levier (53), et au moyen de biellettes intermédiaires et d'articulations dudit système à biellettes de solidarisation.

18. Capote selon la revendication 17, **caractérisée par le fait que** le système de verrouillage comporte une cheville de verrouillage (58) qui est montée à coulissement axial dans la bague (54) et qui, en fonction de la position que la colonne principale (17) ou la biellette principale (20) a prise par pivotement, vis-à-vis de la partie latérale (42) du caisson de pavillon, est animée d'un coulissement la mettant en prise d'accouplement avec ladite colonne principale (17) ou ladite biellette principale (20).

19. Capote selon l'une des revendications 15 à 18, **caractérisée par le fait qu'**une course de mouvement du système à biellettes de solidarisation, notamment du bras de levier (53) de la bague (54), est limitée par des butées (55, 56).

20. Capote selon l'une des revendications 15 à 19, **caractérisée par le fait que** les articulations pivotantes (43) des biellettes de pavillon (11) antérieures de droite et de gauche, qui sont disposées sur les parties latérales (42) du caisson de pavillon situées de part et d'autre, et comportent un axe vertical de pivotement (44), sont mutuellement décalées vis-à-vis de l'axe longitudinal de la capote.

21. Capote selon l'une des revendications 7 à 10, **caractérisée par le fait que**, lors d'une poursuite du coulissement rétrograde à partir d'une position intermédiaire bien définie, l'arceau frontal (3) actionne un système à biellettes auxiliaires (14, 15, 16) en vue du pivotement ou du pivotement rentrant des biellettes de pavillon (11) antérieures.

22. Capote selon l'une des revendications 7 à 10, **caractérisée par le fait que** les biellettes de pavillon (11) antérieures peuvent être animées de pivotements par l'intermédiaire d'un entraînement additionnel.

23. Capote selon l'une des revendications 1 à 22, **caractérisée par le fait qu'**un entraînement destiné à l'arceau frontal (3) est disposé sur une biellette de pavillon (12) postérieure, sur un arceau principal (30, 31, 32) ou sur un caisson de pavillon ; et est relié audit arceau frontal (3) par l'intermédiaire de câbles de traction ou d'une tringlerie Bowden.

24. Capote selon l'une des revendications 1 à 23, **caractérisée par le fait qu'**un mouvement respectif de coulissement de l'arceau frontal (3), à partir d'une position intermédiaire ouverte, provoque respectivement le verrouillage ou le déverrouillage d'un système de verrouillage conçu pour arrêter les biellettes de pavillon (11) sur l'entretoise antérieure (4).

25. Capote selon l'une des revendications 1 à 24, **caractérisée par le fait que** l'arceau frontal (3) est monté sur les guides (9, 10) au moyen d'éléments de glissement (5, 6).

26. Capote selon l'une des revendications 1 à 25, **caractérisée par le fait que** les guides (9, 10) présentent des segments inclinés (26, 27) qui, au stade de l'ouverture, soulèvent l'arceau frontal (3) en lui faisant quitter sa position fermée.

27. Capote selon l'une des revendications 2 à 26, **caractérisée par le fait que** les biellettes de pavillon (11) antérieures sont respectivement constituées de deux éléments de biellettes de pavillon qui sont agencés en succession et sont reliés l'un à l'autre par l'intermédiaire d'une articulation.

28. Capote selon l'une des revendications 1 à 27, **caractérisée par le fait que** l'arceau frontal (3) forme une coiffe destinée à un espace de remisage.
